# EUROPEAN PATENT SPECIFICATION

(11) **EP 1 832 042 B1**
(45) Date of publication and mention of the grant of the patent: **13.02.2013**
(21) Application number: 05818848.3
(22) Date of filing: 22.12.2005
(51) Int. Cl.: H04L 12/14, H04W 4/24

(54) **METHOD FOR PROVIDING A BEARER SERVICE TO A MOBILE STATION IN A TELECOMMUNICATIONS SYSTEM**
VERFAHREN ZUR BEREITSTELLUNG EINES TRÄGERDIENSTES FÜR EINE MOBILSTATION IN EINEM TELEKOMMUNIKATIONSSYSTEM
PROCEDE VISANT A FOURNIR UN SERVICE SUPPORT A UNE STATION MOBILE D'UN SYSTEME DE TELECOMMUNICATIONS

(30) Priority: 29.12.2004 FI 20045509
(43) Date of publication of application: 12.09.2007
(73) Proprietor: TeliaSonera AB, 10663 Stockholm (SE)
(72) Inventor: SVAHNSTRÖM, Niclas, FI-00250 Helsinki (FI); RAITOLA, Mika, FI-02430 Masala (FI)
(74) Representative: Äkräs, Tapio Juhani
(86) International application number: PCT/FI2005/050476
(87) International publication number: WO 2006/070068

(56) References cited:
- WO-A1-2004/012389
- WO-A2-02/37870
- WO-A2-02/37870
- US-A1- 2002 036 983
- US-A1- 2004 260 951
- US-A1- 2006 029 084

## Description

### FIELD OF THE INVENTION

The present invention relates to providing a bearer service to a mobile station in a telecommunications system, and more particularly to charging a user for the bearer service.

### BACKGROUND OF THE INVENTION

A bearer service refers to a part of a telecommunication service provided by an operator, which guarantees the capability for transmission of signals between user-network interfaces. The bearer service enables a connection for speech, audio, digital data transmission, etc. A bearer service may also be referred to as a network service, operator service, system service or a carrier service.

A user of a mobile station may have access to a wide range of services by means of a mobile network. A great number of service providers provide different service applications on the Internet or in other networks, and the mobile network may provide the mobile station with a connection to those applications. Different applications may require different bearer services. At least four different traffic classes have been standardized for the bearer services: conversational class, streaming class, background class and interactive class. The traffic classes are also referred to as quality of service (QoS) classes, and they define the performance expectations of the bearer service. The conversational class and streaming class provide a real-time quality of data transmission where no significant delays are allowed. The accuracy of the data transmission is not necessarily a critical issue in the conversational class and in the streaming class. In this context, the terms "real-time class" or "real-time traffic class" will also be used to refer to the conversational class or the streaming class.

A conversational class refers to a real-time traffic class intended for real-time conversation requiring a low transfer delay and preserved time variation between information entities, for example packets, of a stream. Real-time conversation using the conversational class is typically carried out in connection with interpersonal communication. The conversational class may be used, for example, for voice and video telephony.

A streaming class refers to a real-time traffic class for real-time stream applications requiring a preserved delay variation between information entities, such as samples or packets, within a flow. The streaming class is used for one-way transport, such as real-time video. With a streaming application, the client may start displaying data before the entire file has been transmitted. A streaming class is typically applied to situations where one end of a connection is human and the other end is a machine.

Operators may wish to charge the user more for using a real-time class bearer service than for using a "non-real-time" bearer service. In a situation where a mobile station is roaming in another operator's network, the user is typically billed based on charging for data collected by both the roaming network operator and the home network operator. A problem with the above arrangement is that no solution exists for adjusting the charging of the user in the visited network on the basis of the traffic class of the bearer service.

WO 02/37870 A2 discloses that a token associated with a multimedia session is generated and used to correlate session charges for operations performed in a packet-switched access network and for operations performed in a multimedia system. A charging node recognizes an SBLP-implemented indication as an agreement by UE to service-based local policy enforcement of the GPRS bearers by the visited network or serving network operator.

### BRIEF DESCRIPTION OF THE INVENTION

An object of the present solution is to provide a method and an arrangement for implementing the method so as to alleviate the above-described problem. The objects are achieved by a method, a system, a mobile network, a serving network, a gateway network node and a serving network node which are characterized by what is stated in the independent claims. Embodiments are disclosed in the dependent claims.

The solution of the present application is based on the idea of enabling a bearer service to be provided between a roaming mobile station and its home network, in which solution both the home network and the roaming network are able to recognize if a roaming user is provided with a real-time bearer service. According to the present solution, as a response to receiving a real-time bearer service request in a roaming network node from the mobile station, the roaming network node is arranged to obtain information on the traffic class of the mobile station, and, if the requested traffic class is allowed to the mobile station i.e. if the requested real-time traffic class is supported by the mobile station in the roaming network, the roaming network node is arranged to store information on said real-time traffic class and on the home network of the mobile station. After receiving the bearer service request a home network node is arranged to store information on said real-time traffic class and on the roaming network. As the requested real-time bearer service is provided between the mobile station and the home network, the roaming network node is arranged to utilize the information stored in the roaming network node in order to generate first charging data, and the home network node is arranged to utilize the information stored in the home network node in order to generate second charging data.

An advantage of the present solution is that as both the home network operator and the roaming network operator are able to recognize that a roaming mobile station is provided with a real-time class bearer service they are both able to adjust (for example, to charge extra) the charging for the provision of the real-time bearer for a roaming mobile station.

### BRIEF DESCRIPTION OF THE DRAWINGS

In the following, the present solution will be described in greater detail by means of embodiments and with reference to the accompanying drawings, in which
Figure 1 illustrates a telecommunications system according to the present solution;
Figure 2 illustrates signalling according to the present solution;
Figure 3 is a flow chart illustrating the function of a GGSN of a home network according to the present solution;
Figure 4 is a flow chart illustrating the function of an SGSN of a roaming network according to the present solution;
Figure 5 illustrates IMS (IP multimedia subsystem) interworking according to the present solution.

### DETAILED DESCRIPTION OF THE INVENTION

Embodiments of the present solution will be described below implemented in a 3^{rd} generation mobile communication system, such as UMTS (Universal Mobile Telecommunications System). However, the solution is not restricted to these embodiments, but it can be applied to any mobile communication system implementing a GPRS-type packet radio. Other examples of such systems include IMT-2000, IS-41, GSM (Global System for Mobile communications) or other similar mobile communication systems, such as PCS (Personal Communication System) or DCS 1800 (Digital Cellular System for 1800 MHz). Specifications of mobile systems in general and of the IMT-2000 and the UMTS in particular develop rapidly. Such development may require additional changes to be made to the solution. Therefore, all the words and expressions should be interpreted as broadly as possible and they are only intended to illustrate and not to restrict the solution. What is essential for the solution is the function itself and not the network element or the device in which the function is implemented.

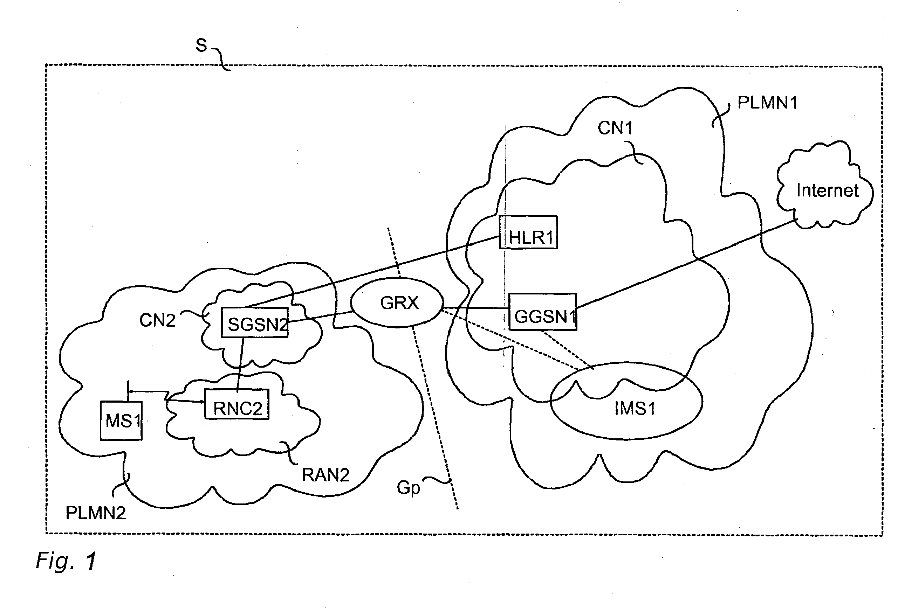

Figure 1 shows a simplified version of a network architecture according to the present solution, only illustrating the components that are essential to the solution, even though those skilled in the art naturally know that a general mobile communication system also comprises other functions and structures which do not have to be described in more detail herein. Figure 1 illustrates mobile networks PLMN1 and PLMN2 (Public land mobile network) of two different operators. The interface between them is called a Gp interface. The main parts of a GPRS network are a core network CN1, CN2, a radio access network RAN2 (Radio access network) and a mobile station MS1. The radio access network RAN2 comprises radio network controllers RNC2 and base stations (not shown). The radio network controller RNC2 is connected to a serving GPRS support node SGSN2 located in the core network CN2. The core network CN1 further comprises a home location register HLR1 and a gateway GPRS support node GGSN1.

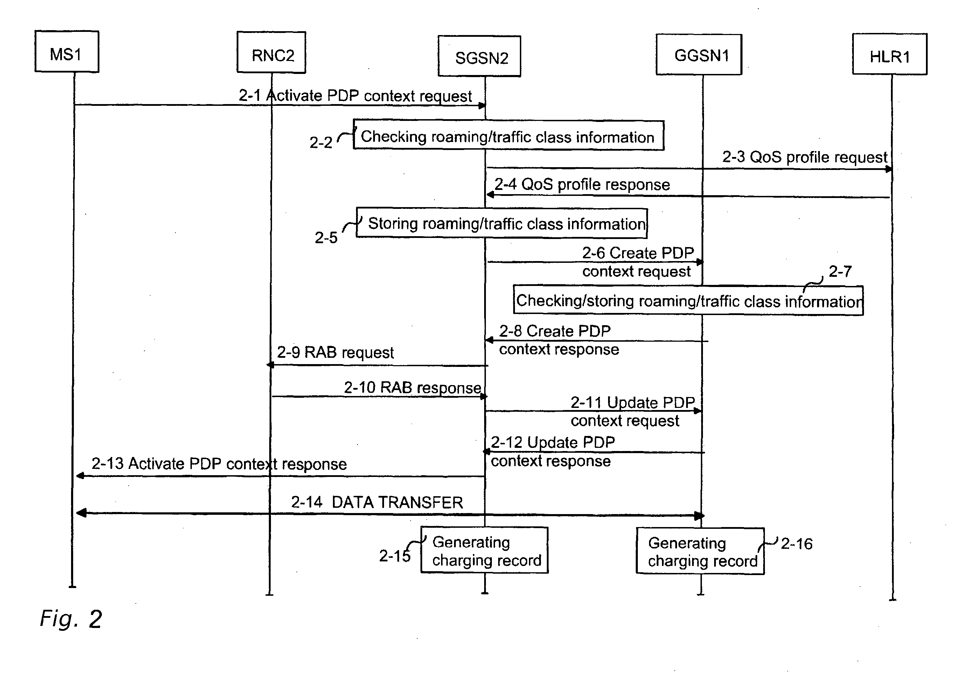

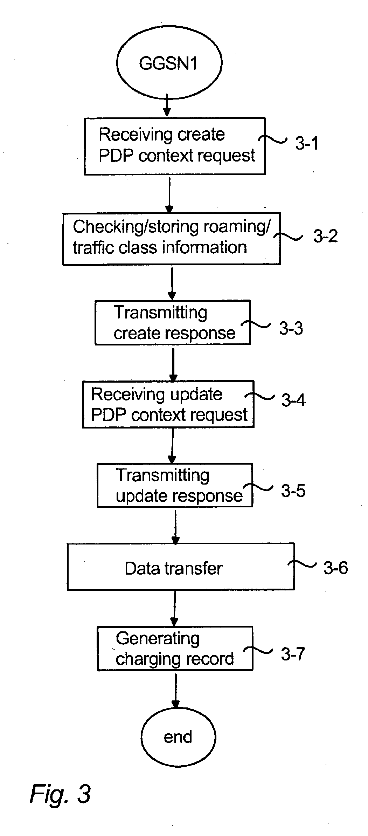

The main function of the gateway GPRS support node GGSN1 is interaction with an external data network. The GGSN1 connects an operator to systems outside the GPRS network, such as the Internet, X.25 network or WAP (Wireless Application Protocol) or messaging applications. The GGSN1 contains PDP (Packet Data Protocol) addresses and routing information, or SGSN addresses, of GPRS subscribers. The operation of a GGSN1 according to the first embodiment of the present solution will be described below in connection with Figures 2 and 3.

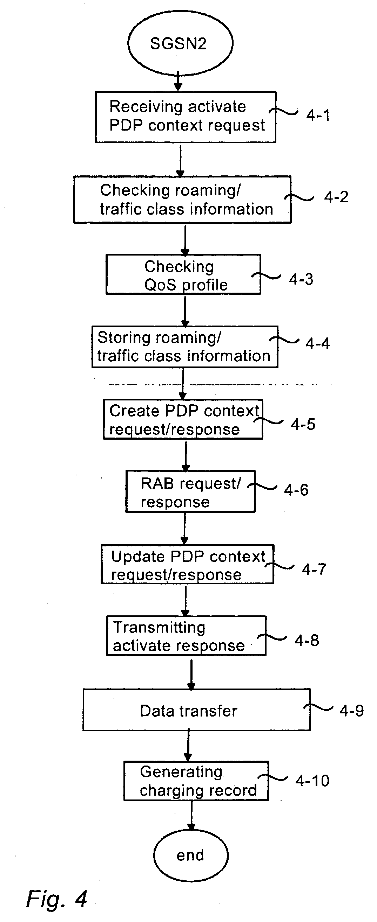

The main functions of the serving GPRS support node SGSN2 include detecting new GPRS mobile stations MS1 in its service area, handling registration processes of new mobile stations MS1, transmitting/receiving data packets to/from the GPRS mobile station MS1, and maintaining a register of locations of mobile stations within the service area. The operation of an SGSN2 according to an embodiment of the present solution will be described below in connection with Figures 2 and 4.

An IP multimedia subsystem IMS refers to a system providing IP (Internet Protocol) multimedia services which complement the services provided by the circuit switched part of the core network CN1. The IMS supports new IP-based multimedia services as well as interoperability with traditional telephony services. The IMS can be described as a framework for enabling advanced IP services and applications on top of a packet bearer. The packet bearer can be any access network, such as a mobile network. The IMS does not affect connection set-up (i.e. a PDP context activation procedure).

A Session Initiation Protocol (SIP) is used for control plane signalling between the mobile station MS1 and the IMS1 as well as between the components within the IMS1. The SIP is used for establishing and ending multimedia sessions in the IMS1. A Session Description Protocol (SDP) is used for conveying information on media streams in multimedia sessions in order to allow recipients of a session description to participate in the session. The SDP is used for negotiating session parameters, which further affect the QoS offered to the service in the mobile network PLMN1, PLMN2, e.g. bandwidth and traffic class. A 3GPP (3^{rd} generation partnership project) has specified an end-to-end QoS concept for the IMS1. This adds the QoS negotiation to the application layer-and synchronizes it with the transport layer QoS negotiation (i.e. the QoS negotiation related to the PDP context activation/modification). Generally, the end-to-end QoS does not affect the traffic classes and their definition. It provides a way for the application layer to negotiate appropriate parameters for the session and these parameters are translated into QoS parameters in the mobile network.

The mobile station MS1 can be a simplified terminal only intended for speech, or it can be a terminal for multiple services operating as a service platform and supporting the loading and execution of different service-related functions. The mobile station MS1 comprises actual mobile equipment and a removably associated identification card SIM (Subscriber Identity Module), which is also called a subscriber identity module. In this connection, a mobile station MS1 (i.e. user equipment) generally refers to an entity comprising the actual terminal and the subscriber identity module. The mobile equipment can be any equipment or a combination of several different equipment, such as a PDA (Personal Digital Assistant) or a PC (Personal Computer), capable of communicating in a mobile communication system.

GPRS or enhanced GPRS roaming is possible between numerous network operators around the world. A Gp interface between the GPRS support nodes of different operators' mobile networks PLMN1, PLMN2 connects the networks PLMN1, PLMN2 together. This interface is IP based, supporting appropriate routing and security protocols to enable a subscriber to access its home services from the roaming network. The term "roaming network" may also be referred to as a "visited network". A common solution is to use a GRX (GPRS roaming exchange) network as a backbone network between the PLMNs. This function is typically provided by means of a 3rd party IP network offering VPN (Virtual private network) services which connect the roaming partner networks together.

An RAB (Radio Access Bearer) service is set up between the mobile station MS1 and the core network CN1, CN2, and it contains a service provided by the access layer to the non-access layer for forwarding user data. Different RABs are used depending on the subscription, service, desired QoS etc. The core network controls the set-up, modification and disassembly of the RAB over the radio access network. The set-up and modification of the RAB are functions that the core network initiates and the RAN2 implements.

In order to transmit and receive GPRS data, the mobile station MS has to activate at least one PDP address it wishes to use. PDP refers to a protocol transmitting data as packets. This activation makes the mobile station MS known in the corresponding GGSN1, and interaction with external data networks may begin. A PDP context defines data transmission parameters, such as the PDP type (e.g. X.25 or IP), PDP address, quality of service QoS, and network service access point identifier NSAPI.

Figure 2 illustrates signalling according to an embodiment of the present solution where a mobile station MS1 is roaming in a PLMN2 and a PLMN1 is the home network of the MS1. Thus the PLMN2 is a roaming network, i.e. a visited network, for the MS1. With reference to Figure 2, the MS1 transmits an activate PDP context request message 2-1 to an SGSN2. The message 2-1 includes information on the QoS class, i.e. the traffic class, requested by the MS1. After receiving the message in the SGSN2, it is checked in step 2-2 whether the mobile station is roaming in the PLMN2, and whether a real-time traffic class has been requested by the mobile station MS1. The SGSN2 may detect a roaming mobile station, for example, by means of the IMSI (International Mobile Subscriber Identity) of the mobile station MS1, which indicates the home network of the MS1. If the mobile station is roaming in the PLMN2, and if a real-time traffic class (i.e. a conversational or a streaming class) has been requested by the mobile station MS1, the SGSN2 is arranged to check, by means of messages 2-3 and 2-4, from the HLR1 of the home network of the mobile station MS1, whether the requested real-time traffic class is allowed to the MS1 in PLMN2, for example, whether an agreement exists between the home operator and the PLMN2 operator for providing the requested real-time traffic class for the MS1 in the PLMN2. If the requested traffic class is available for the mobile station MS1, i.e. if the requested real-time traffic class is supported by the mobile station in the roaming network, the SGSN2 stores, in step 2-5, information on the requested traffic class and information on the home network PLMN1 of the mobile station MS1 (e.g. the IMSI). By means of messages 2-3 and 2-4 it may also be checked whether the user is allowed to use real-time traffic class in a visited network in general. For example, the user subscription may be such that no real-time traffic is allowed in a visited network.

Next a create PDP context request message 2-6 is transmitted from the SGSN2 to the GGSN1. After receiving said message in the GGSN1, it is checked in step 2-7 whether the mobile station MS1 is roaming outside the PLMN1, and whether a real-time traffic class bearer has been requested by it. The GGSN1 may detect a roaming mobile station, for example, by means of a Mobile Country Code (MCC) and a Mobile Network Node (MNC), or by means of the IP address of the SGSN2. If the mobile station MS1 is roaming outside the PLMN1, and if a real-time traffic class has been requested by it, the GGSN1 stores 2-7 information on the requested traffic class and information on the roaming network PLMN2 of the MS1 (e.g. the MCC/MNC or the SGSN2 IP address), sets up a PDP context, and transmits 2-8 it to the SGSN2.

In a message 2-9, the SGSN2 requests the radio access bearers from a radio network controller RNC2, which transmits them to the SGSN2 in a message 2-10. The SGSN2 may update the QoS profile by transmitting an update PDP context request message 2-11 to the GGSN1, which then transmits an update PDP context response 2-12 to the SGSN2.

The SGSN2 transmits the PDP connection to the mobile station MS1 in an activate PDP context response message 2-13, and a virtual connection or link is set up between the mobile station MS1 and the GGSN1 via the SGSN2. As a result, the SGSN2 forwards the data packets from the mobile station MS1 to the GGSN1, which in turn forwards to the SGSN2 the data packets received from an external network (e.g. from the Internet) and addressed to the mobile station MS1.

In step 2-15, a first charging record is generated in the SGSN2 on the basis of the provided bearer service and on the basis of the information stored in step 2-5. In step 2-16, a second charging record is generated in the GGSN1 on the basis of the provided bearer service and on the basis of the information stored in step 2-7. Thus, both the roaming operator and the home operator are able to apply their own charging criteria for charging the user when the user is provided with a certain real-time class bearer during roaming. The created charging record may comprise, for example, information on the fact that the mobile station is a roaming mobile station, information on the real-time traffic class used (streaming or conversational class), information on the amount of transmitted data, time information, information on the number of transactions carried out, or information on the operator in question.

Figure 3 is a flow chart illustrating the function of a GGSN1 according to an embodiment of the present solution. With reference to Figure 3, a create PDP context request message is received in the GGSN1 from a SGSN2 in step 3-1. After receiving said message in the GGSN1, it is checked in step 3-2 whether the mobile station MS1 in question is roaming outside its home network PLMN1, and whether a real-time traffic class is requested by it. The GGSN1 may detect the roaming mobile station, for example, by means of the Mobile Country Code MCC and Mobile Network Code MNC or by means of the IP address of the transmitting SGSN2. If the mobile station MS1 is roaming outside the PLMN1, and if a real-time traffic class has been requested by it, the GGSN1 stores 3-2 information on the requested traffic class and on the roaming mobile station (e.g. the MCC/MNC or the SGSN2 IP address), and sets up a PDP context and transmits 3-3 it to the SGSN2. In step 3-4, the GGSN1 may receive an update PDP context request message from the SGSN2 for updating the QoS profile, and in step 3-5 the GGSN1 transmits an update PDP context response to the SGSN2. In step 3-6 a virtual connection or link is set up and the data transfer between the GGSN1 and the MS1 is carried out using the real-time class bearer. In step 3-7, a charging record is generated in the GGSN1 on the basis of the provided bearer service and on the basis of the information stored in step 3-2. The created charging record may comprise, for example, information on the fact that the mobile station is a roaming mobile station, information on the real-time traffic class used (streaming or conversational class), information on the amount of transmitted data, time information, information on the number of transactions carried out, or information on the operator in question.

Figure 4 is a flow chart illustrating the function of an SGSN2 according to an embodiment of the present solution. With reference to Figure 4, an activate PDP context request message is received in the SGSN2 in step 4-1 from a mobile station MS1. Next, it is checked in the SGSN2, in step 4-2, whether the mobile station MS1 is roaming in a PLMN2, and whether a real-time traffic class bearer has been requested by it. The SGSN2 may detect a roaming mobile station, for example, by means of the IMSI (International Mobile Subscriber Identity) of the mobile station MS1, which indicates the home network of the MS1. If the mobile station MS1 is roaming in the PLMN2, and if a real-time traffic class has been requested by it, the SGSN2 is arranged to check, in step 4-3, from the HLR1 of the home network PLMN1 of the mobile station whether the requested real-time traffic class bearer is allowed to the MS1 in PLMN2, for example, whether an agreement exists between the home operator and the PLMN2 operator for providing the requested real-time traffic class for the MS1 in the PLMN2. The agreement guarantees that both the home network and the visited network support the real-time class bearer defined in the QoS profile of the mobile station, and that these networks do not prevent the mobile station from using the real-time class bearer. If the requested traffic class is available for the mobile station MS1, the SGSN2 stores, in step 4-4, information on the requested real-time traffic class and on the home network PLMN1 of the MS1 (e.g the IMSI). In step 4-5, a create PDP context request is transmitted to the GGSN1, and a PDP context is set up as a create PDP context response is received from the GGSN1. In step 4-6, the SGSN2 requests and receives radio access bearers from a radio network controller RNC2. In step 4-7, the updating of the QoS profile may be carried out by transmitting an update PDP context request message to the GGSN1, and by receiving a corresponding response from it. In step 4-8, the SGSN2 transmits the PDP connection to the mobile station MS1 in an activate PDP context response message. In step 4-9 a virtual connection or link is set up and data transfer between the GGSN1 and the MS1 via the SGSN2 can be carried out using the requested real-time class bearer. In step 4-10, a charging record is generated in the SGSN2 on the basis of the provided bearer service and on the basis of the information stored in step 4-4. The created charging record may comprise, for example, information on the fact that the mobile station is a roaming mobile station, information on the real-time traffic class used (streaming or conversational class), information on the amount of transmitted data, time information, information on the number of transactions carried out, or information on the operator in question.

According to another embodiment, if it is found out in the SGSN2 that the requested traffic class is not allowed to the MS1 in the PLMN2, a bearer service of a lower traffic class than the requested one may be offered to the MS1. In such a case, the SGSN2 may be arranged to notify the MS1 that the bearer service request has been downgraded, and the MS1 may either accept or reject the lower class bearer.

According to yet another embodiment, if it is found out in the SGSN2 that the requested traffic class is not allowed for MS1 in the PLMN2, the PDP context negotiation procedure shown in Figures 2, 3 and 4 is discontinued. In such a case, the SGSN2 may be arranged to notify to MS1 that the PDP context negotiation procedure has been interrupted.

According to yet another embodiment, information on the charging record generated in the PLMN2 is provided to the operator of the PLMN1, which combines it with the charging record generated in the PLMN1 in order to create an end-user bill.

User charging is typically based on the amount of transmitted data, but it may also be based on time or the transaction carried out. The present solution enables a real-time bearer service class and/or a roaming situation to be used as a (further) charging basis.

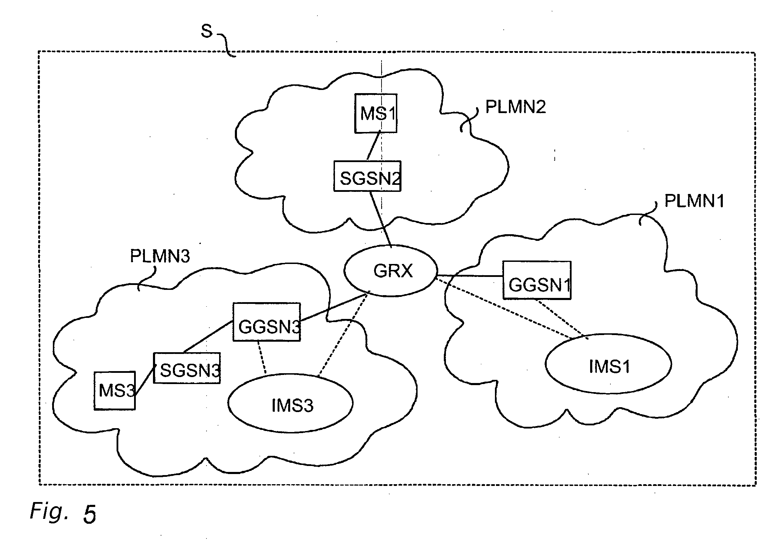

The roaming and charging scenario described above in connection with Figures 1, 2, 3 and 4 may also be applied when a service, such as a person-to-person communication service, is provided by the IP multimedia subsystem IMS1. Also in such a case traffic is routed through the home GGSN1. The IMS1 is located in the home network PLMN1, and the charging is performed in the SGSN2 and the GGSN1. However, the IMS1 itself also produces charging records based on the session and session parameters so that the home operator is able to charge for the services used. The end-to-end QoS concept includes policy control so that the IMS1 controls the QoS that is offered for a certain service. This means that the streaming and/or conversational class have to be allowed for in the policies in order for the end-user to receive such a bearer from the network. The roaming and charging scenario in connection with an IP multimedia subsystem will further be discussed below with reference to Figure 5.

Figure 5 illustrates an IMS interworking situation according to an embodiment of the present solution. The IMS interworking means that different IMS networks IMS1, IMS3 are connected through an inter-PLMN IP network GRX to enable SIP control and transport of the user plane. Referring to Figure 5, the mobile station MS1 is roaming in the PLMN2, and the PLMN1 is the home network of the MS1. Thus the PLMN2 is a roaming network, i.e. a visited network, for the MS1. Another mobile station MS3 is located in its home network PLMN3. The MS1 is using a service of the IP multimedia subsystem IMS1 of its home network PLMN1, and the MS3 is using a service of an IP multimedia subsystem IMS3 of its home network PLMN3. The used IMS1 service and the used IMS3 service may relate to each other. An example of a situation where the IMS1 and IMS3 service relate to each other is when a game is being played between the MS1 and the MS3. In the situation of Figure 5, the charging of the MS1 is performed by the SGSN2, GGSN1 and the IMS1. The charging of the MS3 is performed by a SGSN3 (or by a GGSN3) and by the IMS3. It is required that the networks PLMN1, PLMN2 and PLMN3 are able to support the utilized real-time traffic class. QoS policy is carried out by the IMS1 and the IMS3, such that the PLMN1 is controlled by the IMS1, and the PLMN3 is controlled by the IMS3. A real-time class has to be allowed in the QoS policies of the PLMN1 and the PLMN2. The PLMN1 operator and the PLMN2 operator have a real-time class roaming agreement between them, and there also exists an agreement between the PLMN1 operator and the PLMN3 operator. The agreement between the PLMN1 operator and the PLMN3 operator may include, for example, information of the charging rate for the IMS service. It may further include a statement that the real-time class is allowed and supported for the IMS services.

The signalling messages and steps shown in Figures 2, 3 and 4 are in no an absolute chronological order and they may be executed in an order different from the given one. Other signalling messages may be transmitted and/or other functions may be carried out between the messages and/or steps. The signalling messages are only examples and may include only some of the aforementioned information. The messages may also include some other information. The names of the messages can also differ from the aforementioned ones. It is not essential in which signalling messages the information is transmitted, but it is also possible to use messages other than those described above.

In addition to prior art devices, the system, network nodes or mobile stations implementing the operation according to the present solution comprise means for providing a roaming mobile station with a streaming class and/or conversational class bearer service as described above. Existing network nodes and mobile stations comprise processors and memory, which may be used in the functions according to the invention. All changes necessary for implementing the invention can be carried out by means of software routines that can be added or updated and/or routines contained in application specific integrated circuits (ASIC) and/or programmable circuits, such as an electrically programmable logic device EPLD or a field programmable gate array FPGA.

It will be obvious to a person skilled in the art that as technology advances, the inventive concept can be implemented in various ways. The solution and its embodiments are not limited to the examples described above but may vary within the scope of the claims.

## Claims

1. A method for providing a bearer service for data transmission between a mobile station (MS1) and a home network (PLMN1) of the mobile station (MS1) for a telecommunications system (S) further comprising a serving network (PLMN2), the method comprising
receiving (2-2, 4-1), in the serving network (PLMN2), a bearer service request from the mobile station (MS1), said request including information on a traffic class of the requested bearer service and information on the home network (PLMN1) of the mobile station (MS1);
**characterized in that** if the requested bearer service is of a real-time traffic class and if the mobile station (MS1) is roaming in said serving network (PLMN2), the method comprises the step of
obtaining (2-3, 2-4, 4-3), in the serving network (PLMN2), information on the traffic class of the mobile station (MS1);
wherein, if the requested real-time traffic class is supported by the mobile station (MS1), the method further comprises the steps of
storing (2-5, 4-4), in the serving network (PLMN2), information on the home network (PLMN1) of the mobile station (MS1) and on said real-time traffic class;
providing (2-6, 2-11, 4-5, 4-7) the home network (PLMN1) with information on the serving network (PLMN2) and on said real-time traffic class;
storing (2-7, 3-2), in the home network (PLMN1), the information on the serving network (PLMN2) and on said real-time traffic class;
providing (2-14, 3-6, 4-9) the requested real-time bearer service between the mobile station (MS1) and the home network (PLMN1); and, based on said providing,
generating (2-15, 4-10), in the serving network (PLMN2), a first charging record by utilizing the information on the home network (PLMN1) of the mobile station (MS1) and on said real-time traffic class; and
generating (2-16, 3-7), in the home network (PLMN1), a second charging record by utilizing the information on the serving network (PLMN2) and on said real-time traffic class.

2. A method according to claim 1, **characterized by** obtaining (2-3, 2-4, 4-3) the information on the traffic class of the mobile station (MS1) from a home location register (HLR1) of the home network (PLMN1).

3. A method according to claim 1 or 2, **characterized by** recognizing, in the serving network, the roaming mobile station by means of an International Mobile Subscriber Identity IMSI of the mobile station.

4. A method according to claim 1, 2 or 3, **characterized by** recognizing, in the home network, the roaming mobile station by means of a Mobile Country Code MCC and Mobile Network Code MNC.

5. A method according to any one of the preceding claims 1 to 4, **characterized by** recognizing, in the home network, the roaming mobile station by means of an IP address of a serving network node (SGSN2) of the serving network.

6. A method according to any one of the preceding claims 1 to 5, **characterized by** utilizing, in the home network, the first charging record and the second charging record in order to create an end-user bill.

7. A method according to any one of the preceding claims 1 to 6, **characterized in that** said real-time bearer service is a streaming class bearer service.

8. A method according to any one of the preceding claims 1 to 6, **characterized in that** said real-time bearer service is a conversational class bearer service.

9. A method according to any one of the preceding claims 1 to 8, **characterized in that** if the requested real-time bearer service is provided for data transmission between the mobile station (MS1) and an IP Multimedia Subsystem (IMS1) of the home network (PLMN1), the method further comprises the step of generating, in the IP Multimedia Subsystem (IMS1), a third charging record by utilizing the information on the serving network (PLMN2) of the mobile station (MS1) and on said real-time traffic class.

10. A method according to claim 9, **characterized by** utilizing, in the home network, the first charging record, the second charging record and the third charging record in order to create an end-user bill.

11. A telecommunications system comprising
a mobile station (MS1);
a mobile network (PLMN1) comprising a gateway network node (GGSN1), said mobile network being a home network of the mobile station (MS1); and
a serving network (PLMN2) comprising a serving network node (SGSN2), wherein the serving network node (SGSN2) is configured to
receive a bearer service request from the mobile station (MS1), said request including information on a traffic class of the requested bearer service and information on the home network (PLMN1) of the mobile station (MS1);
**characterized in that** if the requested bearer service is of a real-time traffic class and if the mobile station (MS1) is roaming in said serving network (PLMN2), the serving network node (SGSN2) is configured to
obtain information on the traffic class of the mobile station (MS1); and
if the requested real-time traffic class is supported by the mobile station (MS1), the serving network node (SGSN2) is further configured to
store information on the home network (PLMN1) of the mobile station (MS1) and on said real-time traffic class;
provide the gateway network node (GGSN1) with information on the serving network (PLMN2) and on said real-time traffic class;
wherein the gateway network node (GGSN1) is configured to store the information on the serving network (PLMN2) and on said real-time traffic class; and
wherein the system is configured to provide the requested real-time bearer service between the mobile station (MS1) and the home network (PLMN1); and, based on said providing,
the serving network node (SGSN2) is configured to generate a first charging record by utilizing the information on the home network (PLMN1) of the mobile station (MS1) and on said real-time traffic class; and
the gateway network node (GGSN1) is configured to generate a second charging record by utilizing the information on the serving network (PLMN2) and on said real-time traffic class.

12. A gateway network node (GGSN1) of a mobile network (PLMN1) for a telecommunications system (S) further comprising
a serving network (PLMN2) comprising a serving network node (SGSN2); and
a mobile station (MS1), said mobile network being a home network of the mobile station;
wherein the gateway network node (GGSN1) is configured to receive a bearer service request from the serving network node (SGSN2), said request including information on a traffic class of the requested bearer service and information on the network serving the mobile station (MS1);
**characterized in that** the gateway network node (GGSN1), as a response to receiving a bearer service request for a real-time traffic class bearer service concerning a mobile station (MS1) roaming in the serving network (PLMN2), is configured to
store information on the serving network (PLMN2) of the mobile station (MS1) and on said real-time traffic class; and, based on the provision of the real-time bearer service between the mobile station (MS1) and the home network (PLMN1),
generate a charging record by utilizing the information on the serving network (PLMN2) and on said real-time traffic class.

13. A gateway network node according to claim 12, **characterized in that** it is configured to recognize the roaming mobile station by means of a Mobile Country Code MCC and Mobile Network Code MNC.

14. A gateway network node according to claims 12 or 13, **characterized in that** it is configured to recognize the roaming mobile station by means of an IP address of the serving network node (SGSN2).

15. A gateway network node according to claims 12, 13 or 14, **characterized in that** it is a Gateway GPRS Support Node GGSN.

16. A serving network node (SGSN2) of a serving network (PLMN2) for a telecommunications system (S) further comprising
a mobile station (MS1); and
a home network (PLMN1) of the mobile station (MS1), said home network (PLMN1) comprising a gateway network node (GGSN1);
wherein the serving network node (SGSN2) is configured to
receive a bearer service request from the mobile station (MS1), said request including information on a traffic class of the requested bearer service and information on the home network (PLMN1) of the mobile station (MS1);
**characterized in that** the serving network node (SGSN2), as a response to receiving a bearer service request for a real-time traffic class bearer service from a mobile station (MS1) roaming in the serving network (PLMN2), is configured to
obtain information on the traffic class of the mobile station (MS1);
wherein, if the requested real-time traffic class is supported by the mobile station (MS1), the serving network node (SGSN2) is further configured to
store information on the home network (PLMN1) of the mobile station (MS1) and on said real-time traffic class;
provide the home network (PLMN1) with information on the serving network (PLMN2) and on said real-time traffic class; and, based on the provision of the real-time bearer service between the mobile station (MS1) and the home network (PLMN1),
generate a charging record by utilizing the information on the home network (PLMN1) and on said real-time traffic class.

17. A serving network node according to claim 16, **characterized in that** it is configured to recognize the roaming mobile station by means of the International Mobile Subscriber Identity IMSI of the mobile station.

18. A serving network node according to claims 16 or 17, **characterized in that** it is a Serving GPRS Support Node SGSN.

## Patentansprüche

1. Verfahren zur Bereitstellung eines Trägerdienstes zur Datenübertragung zwischen einer Mobilstation (MS1) und einem Heimatnetz (PLMN1) der Mobilstation (MS1) für ein Telekommunikationssystem (S), das ferner ein Versorgungsnetz (PLMN2) umfasst, wobei das Verfahren Folgendes umfasst:
Empfangen (2-2, 4-1) einer Trägerdienstanforderung von der Mobilstation (MS1) im Versorgungsnetz (PLMN2), wobei die Anforderung Informationen über eine Verkehrsklasse des angeforderten Trägerdienstes und Informationen über das Heimatnetz (PLMN1) der Mobilstation (MS1) umfasst;
**dadurch gekennzeichnet, dass**, wenn der angeforderte Trägerdienst von einer Echtzeit-Verkehrsklasse ist und wenn die Mobilstation (MS1) in dem Versorgungsnetz (PLMN2) roamt, das Verfahren den folgenden Schritt umfasst:
Erhalten (2-3, 2-4, 4-3) von Informationen über die Verkehrsklasse der Mobilstation (MS1) im Versorgungsnetz (PLMN2);
wobei das Verfahren, wenn die angeforderte Echtzeit-Verkehrsklasse durch die Mobilstation (MS1) unterstützt wird, ferner die folgenden Schritte umfasst:
Speichern (2-5, 4-4) von Informationen über das Heimatnetz (PLMN1) der Mobilstation (MS1) und über die Echtzeit-Verkehrsklasse in dem Versorgungsnetz (PLMN2);
Bereitstellen (2-6, 2-11, 4-5, 4-7) von Informationen über das Versorgungsnetz (PLMN2) und über die Echtzeit-Verkehrsklasse für das Heimatnetz (PLMN1);
Speichern (2-7, 3-2) der Informationen über das Versorgungsnetz (PLMN2) und über die Echtzeit-Verkehrsklasse in dem Heimatnetz (PLMN1);
Bereitstellen (2-14, 3-6, 4-9) des angeforderten Echtzeit-Trägerdienstes zwischen der Mobilstation (MS1) und dem Heimatnetz (PLMN1); und, auf der Grundlage des Bereitstellens,
Erzeugen (2-15, 4-10) einer ersten Abrechnungsaufzeichnung in dem Versorgungsnetz (PLMN2) unter Verwendung der Informationen über das Heimatnetz (PLMN1) der Mobilstation (MS1) und über die Echtzeit-Verkehrsklasse; und
Erzeugen (2-16, 3-7) einer zweiten Abrechnungsaufzeichnung in dem Heimatnetz (PLMN1) unter Verwendung der Informationen über das Versorgungsnetz (PLMN2) und über die Echtzeit-Verkehrsklasse.

2. Verfahren nach Anspruch 1, **gekennzeichnet durch** das Erhalten (2-3, 2-4, 4-3) der Informationen über die Verkehrsklasse der Mobilstation (MS1) von einer Heimatdatei (HLR1) des Heimatnetzes (PLMN1).

3. Verfahren nach Anspruch 1 oder 2, **gekennzeichnet durch** das Erkennen der roamenden Mobilstation in dem Versorgungsnetz mittels einer internationalen Mobilfunk-Teilnehmerkennung (International Mobile Subscriber Identity - IMSI) der Mobilstation.

4. Verfahren nach Anspruch 1, 2 oder 3, **gekennzeichnet durch** das Erkennen der roamenden Mobilstation im Heimatnetz mittels eines Mobile Country Codes (MCC) und eines Mobile Network Codes (MNC).

5. Verfahren nach einem der Ansprüche 1 bis 4, **gekennzeichnet durch** das Erkennen der roamenden Mobilstation im Heimatnetz mittels einer IP-Adresse eines Versorgungsnetzknotens (SGSN2) des Versorgungsnetzes.

6. Verfahren nach einem der vorhergehenden Ansprüche 1 bis 5, **gekennzeichnet durch** das Verwenden der ersten Abrechnungsaufzeichnung und der zweiten Abrechnungsaufzeichnung im Heimatnetz zum Erzeugen einer Endbenutzerrechnung.

7. Verfahren nach einem der vorhergehenden Ansprüche 1 bis 6, **dadurch gekennzeichnet, dass** der Echtzeit-Trägerdienst ein Streaming-Class-Trägerdienst ist.

8. Verfahren nach einem der vorhergehenden Ansprüche 1 bis 6, **dadurch gekennzeichnet, dass** der Echtzeit-Trägerdienst ein Conversational-Class-Trägerdienst ist.

9. Verfahren nach einem der vorhergehenden Ansprüche 1 bis 8, **dadurch gekennzeichnet, dass** das Verfahren, wenn der angeforderte Echtzeit-Trägerdienst für die Datenübertragung zwischen der Mobilstation (MS1) und einem IP Multimedia Subsystem (IMS1) des Heimatnetzes (PLMN1) bereitgestellt wird, ferner im IP Multimedia Subsystem (IMS1) den Schritt des Erzeugens einer dritten Abrechnungsaufzeichnung unter Verwendung der Informationen über das Versorgungsnetz (PLNM2) der Mobilstation (MS1) und über die Echtzeit-Verkehrsklasse umfasst.

10. Verfahren nach Anspruch 9, **gekennzeichnet durch** das Verwenden der ersten Abrechnungsaufzeichnung, der zweiten Abrechnungsaufzeichnung und der dritten Abrechnungsaufzeichnung im Heimatnetz, um eine Endbenutzerrechnung zu erstellen.

11. Telekommunikationssystem, das Folgendes umfasst:
eine Mobilstation (MS1);
ein Mobilfunknetz (PLMN1), das einen Gateway-Netzknoten (GGSN1) umfasst, wobei das Mobilfunknetz ein Heimatnetz der Mobilstation (MS1) ist; und
ein Versorgungsnetz (PLMN2), das einen Versorgungsnetzknoten (SGSN2) umfasst, wobei der Versorgungsnetzknoten (SGSN2) für Folgendes konfiguriert ist:
Empfangen einer Trägerdienstanforderung von der Mobilstation (MS1), wobei die Anforderung Informationen über eine Verkehrsklasse des angeforderten Trägerdienstes und Informationen über das Heimatnetz (PLMN1) der Mobilstation (MS1) umfasst;
**dadurch gekennzeichnet, dass** der Versorgungsnetzknoten (SGSN2), wenn der angeforderte Trägerdienst von einer Echtzeit-Verkehrsklasse ist und wenn die Mobilstation (MS1) in dem Versorgungsnetz (PLMN2) roamt, für Folgendes konfiguriert ist:
Erhalten von Informationen über die Verkehrsklasse der Mobilstation (MS1); und
der Versorgungsnetzknoten (SGSN2), wenn die angeforderte Echtzeit-Verkehrsklasse durch die Mobilstation (MS1) unterstützt wird, ferner für Folgendes konfiguriert ist:
Speichern von Informationen über das Heimatnetz (PLMN1) der Mobilstation (MS1) und über die Echtzeit-Verkehrsklasse;
Bereitstellen von Informationen über das Versorgungsnetz (PLMN2) und über die Echtzeit-Verkehrsklasse für den Gateway-Netzknoten (GGSN1)
wobei der Gateway-Netzknoten (GGSN1) konfiguriert ist, um die Informationen über das Versorgungsnetz (PLMN2) und über die Echtzeit-Verkehrsklasse zu speichern; und
wobei das System konfiguriert ist, um den angeforderten Echtzeit-Trägerdienst zwischen der Mobilstation (MS1) und dem Heimatnetz (PLMN1) bereitzustellen; und, auf der Grundlage des Bereitstellens,
der Versorgungsnetzknoten (SGSN2) konfiguriert ist, um unter Verwendung der Informationen über das Heimatnetz (PLMN1) der Mobilstation (MS1) und über die Echtzeit-Verkehrsklasse eine erste Abrechnungsaufzeichnung zu erzeugen; und
der Gateway-Netzknoten (GGSN1) konfiguriert ist, um unter Verwendung der Informationen über das Versorgungsnetz (PLMN2) und über die Echtzeit-Verkehrsklasse eine zweite Abrechnungsaufzeichnung zu erzeugen.

12. Gateway-Netzknoten (GGSN1) eines Mobilfunknetzes (PLMN1) für ein Telekommunikationssystem (S), das ferner Folgendes umfasst:
ein Versorgungsnetz (PLMN2), das einen Versorgungsnetzknoten (SGSN2) umfasst; und
eine Mobilstation (MS1), wobei das Mobilfunknetz ein Heimatnetz der Mobilstation ist;
wobei der Gateway-Netzknoten (GGSN1) für Folgendes konfiguriert ist:
Empfangen einer Trägerdienstanforderung von dem Versorgungsnetzknoten (SGSN2), wobei die Anforderung Informationen über eine Verkehrsklasse des angeforderten Trägerdienstes und Informationen über das Netz umfasst, das die Mobilstation (MS1) versorgt;
**dadurch gekennzeichnet, dass** der Gateway-Netzknoten (GGSN1) als Reaktion auf das Empfangen einer Trägerdienstanforderung für einen Echtzeit-Verkehrsklassen-Trägerdienst, der eine Mobilstation (MS1) betrifft, die im Versorgungsnetz (PLMN2) roamt, für Folgendes konfiguriert ist:
Speichern von Informationen über das Versorgungsnetz (PLMN2) der Mobilstation (MS1) und über die Echtzeit-Verkehrsklasse; und, auf der Grundlage des Bereitstellens des Echtzeit-Trägerdienstes zwischen der Mobilstation (MS1) und dem Heimatnetz (PLMN1),
Erzeugen einer Abrechnungsaufzeichnung unter Verwendung der Informationen über das Versorgungsnetz (PLMN2) und über die Echtzeit-Verkehrsklasse.

13. Gateway-Netzknoten nach Anspruch 12, **dadurch gekennzeichnet, dass** er konfiguriert ist, um die roamende Mobilstation mittels eines Mobile Country Codes MSS und eines Mobile Network Codes MNC zu erkennen.

14. Gateway-Netzknoten nach Anspruch 12 oder 13, **dadurch gekennzeichnet, dass** er konfiguriert ist, um die roamende Mobilstation mittels einer IP-Adresse des Versorgungsnetzknotens (SGSN2) zu erkennen.

15. Gateway-Netzknoten nach Anspruch 12, 13 oder 14, **dadurch gekennzeichnet, dass** er ein Gateway GPRS Support Node GGSN ist.

16. Versorgungsnetzknoten (SGSN2) eines Versorgungsnetzes (PLMN2) für ein Telekommunikationssystem (S), das ferner Folgendes umfasst:
eine Mobilstation (MS1); und
ein Heimatnetz (PLMN1) der Mobilstation (MS1), wobei das Heimatnetz (PLMN1) einen Gateway-Netzknoten (GGSN1) umfasst;
wobei der Versorgungsnetzknoten (SGSN2) für Folgendes konfiguriert ist:
Empfangen einer Trägerdienstanforderung von der Mobilstation (MS1), wobei die Anforderung Informationen über eine Verkehrsklasse des angeforderten Trägerdienstes und Informationen über das Heimatnetz (PLMN1) der Mobilstation (MS1) umfasst;
**dadurch gekennzeichnet, dass** der Versorgungsnetzknoten (SGSN2) als Reaktion auf das Empfangen einer Trägerdienstanforderung für einen Echtzeit-Verkehrsklassen-Trägerdienst von einer Mobilstation (MS1), die in dem Versorgungsnetz (PLMN2) roamt, für Folgendes konfiguriert ist:
Erhalten von Informationen über die Verkehrsklasse der Mobilstation (MS1);
wobei der Versorgungsnetzknoten (SGSN2), wenn die angeforderte Echtzeit-Verkehrsklasse durch die Mobilstation (MS1) unterstützt wird, ferner für Folgendes konfiguriert ist:
Speichern von Informationen über das Heimatnetz (PLMN1) der Mobilstation (MS1) und über die Echtzeit-Verkehrsklasse;
Bereitstellen von Informationen über das Versorgungsnetz (PLMN2) und über die Echtzeit-Verkehrsklasse für das Heimatnetz (PLMN1); und auf der Grundlage des Bereitstellens des Echtzeit-Trägerdienstes zwischen der Mobilstation (MS1) und dem Heimatnetz (PLMN1),
Erzeugen einer Abrechnungsaufzeichnung unter Verwendung der Informationen über das Heimatnetz (PLMN1) und über die Echtzeit-Verkehrsklasse.

17. Versorgungsnetzknoten nach Anspruch 16, **dadurch gekennzeichnet, dass** er konfiguriert ist, um die roamende Mobilstation mittels der internationalen Mobilfunk-Teilnehmerkennung (International Mobile Subscriber Identity - IMSI) der Mobilstation zu erkennen.

18. Versorgungsnetzknoten nach Anspruch 16 oder 17, **dadurch gekennzeichnet, dass** er ein Serving GPRS Support Node SGSN ist.

## Revendications

1. Procédé visant à fournir un service support pour une transmission de données entre une station mobile (MS1) et un réseau domestique (PLMN1) de la station mobile (MS1) pour un système de télécommunications (S) comprenant en outre un réseau de desserte (PLMN2), le procédé comprenant :
la réception (2-2, 4-1), dans le réseau de desserte (PLMN2), d'une demande de service support émanant de la station mobile (MS1), ladite demande comprenant des informations sur une classe de trafic du service support demandé et des informations sur le réseau domestique (PLMN1) de la station mobile (MS1) ;
**caractérisé en ce que**, si le service support demandé est d'une classe de trafic en temps réel et si la station mobile (MS1) est en itinérance dans ledit réseau de desserte (PLMN2), le procédé comprend l'étape de :
obtention (2-3, 2-4, 4-3), dans le réseau de desserte (PLMN2), d'informations sur la classe de trafic de la station mobile (MS1) ;
dans lequel, si la classe de trafic en temps réel demandée est prise en charge par la station mobile (MS1), le procédé comprend en outre les étapes de :
stockage (2-5, 4-4), dans le réseau de desserte (PLMN2), d'informations sur le réseau domestique (PLMN1) de la station mobile (MS1) et sur ladite classe de trafic en temps réel ;
fourniture (2-6, 2-11, 4-5, 4-7) au réseau domestique (PLMN1) d'informations sur le réseau de desserte (PLMN2) et sur ladite classe de trafic en temps réel ;
stockage (2-7, 3-2), dans le réseau domestique (PLMN1), des informations sur le réseau de desserte (PLMN2) et sur ladite classe de trafic en temps réel ;
fourniture (2-14, 3-6, 4-9) du service support en temps réel demandé entre la station mobile (MS1) et le réseau domestique (PLMN1) ; et, sur la base de ladite fourniture,
génération (2-15, 4-10), dans le réseau de desserte (PLMN2), d'un premier enregistrement de facturation en utilisant les informations sur le réseau domestique (PLMN1) de la station mobile (MS1) et sur ladite classe de trafic en temps réel ; et
génération (2-16, 3-7), dans le réseau domestique (PLMN1), d'un deuxième enregistrement de facturation en utilisant les informations sur le réseau de desserte (PLMN2) et sur ladite classe de trafic en temps réel.

2. Procédé selon la revendication 1, **caractérisé par** l'obtention (2-3, 2-4, 4-3) des informations sur la classe de trafic de la station mobile (MS1) à partir d'un registre d'emplacement domestique (HLR1) du réseau domestique (PLMN1).

3. Procédé selon la revendication 1 ou 2, **caractérisé par** la reconnaissance, dans le réseau de desserte, de la station mobile itinérante au moyen d'une identité d'abonné mobile internationale (IMSI) de la station mobile.

4. Procédé selon la revendication 1, 2 ou 3, **caractérisé par** la reconnaissance, dans le réseau domestique, de la station mobile itinérante au moyen d'un code de pays mobile (MCC) et d'un code de réseau mobile (MNC).

5. Procédé selon l'une quelconque des revendications précédentes 1 à 4, **caractérisé par** la reconnaissance, dans le réseau domestique, de la station mobile itinérante au moyen d'une adresse IP d'un noeud de réseau de desserte (SGSN2) du réseau de desserte.

6. Procédé selon l'une quelconque des revendications précédentes 1 à 5, **caractérisé par** l'utilisation, dans le réseau domestique, du premier enregistrement de facturation et du deuxième enregistrement de facturation afin de créer une facture d'utilisateur final.

7. Procédé selon l'une quelconque des revendications précédentes 1 à 6, **caractérisé en ce que** ledit service support en temps réel est un service support de classe de streaming.

8. Procédé selon l'une quelconque des revendications précédentes 1 à 6, **caractérisé en ce que** ledit service support en temps réel est un service support de classe conversationnelle.

9. Procédé selon l'une quelconque des revendications précédentes 1 à 8, **caractérisé en ce que**, si le service support en temps réel demandé est fourni pour une transmission de données entre la station mobile (MS1) et un sous-système multimédia IP (IMS1) du réseau domestique (PLMN1), le procédé comprend en outre l'étape de génération, dans le sous-système multimédia IP (IMS1), d'un troisième enregistrement de facturation en utilisant les informations sur le réseau de desserte (PLMN2) de la station mobile (MS1) et sur ladite classe de trafic en temps réel.

10. Procédé selon la revendication 9, **caractérisé par** l'utilisation, dans le réseau domestique, du premier enregistrement de facturation, du deuxième enregistrement de facturation et du troisième enregistrement de facturation afin de créer une facture d'utilisateur final.

11. Système de télécommunications comprenant :
une station mobile (MS1) ;
un réseau mobile (PLMN1) comprenant un noeud de réseau de passerelle (GGSN1), ledit réseau mobile étant un réseau domestique de la station mobile (MS1) ; et
un réseau de desserte (PLMN2) comprenant un noeud de réseau de desserte (SGSN2), dans lequel le noeud de réseau de desserte (SGSN2) est configuré pour effectuer :
la réception d'une demande de service support émanant de la station mobile (MS1), ladite demande comprenant des informations sur une classe de trafic du service support demandé et des informations sur le réseau domestique (PLMN1) de la station mobile (MS1) ;
**caractérisé en ce que**, si le service support demandé est d'une classe de trafic en temps réel et si la station mobile (MS1) est en itinérance dans ledit réseau de desserte (PLMN2), le noeud de réseau de desserte (SGSN2) est configuré pour effectuer :
l'obtention d'informations sur la classe de trafic de la station mobile (MS1) ; et
si la classe de trafic en temps réel demandée est prise en charge par la station mobile (MS1), le noeud de réseau de desserte (SGSN2) est en outre configuré pour effectuer :
le stockage d'informations sur le réseau domestique (PLMN1) de la station mobile (MS1) et sur ladite classe de trafic en temps réel ;
la fourniture au noeud de réseau de passerelle (GGSN1) d'informations sur le réseau de desserte (PLMN2) et sur ladite classe de trafic en temps réel ;
dans lequel le noeud de réseau de passerelle (GGSN1) est configuré pour effectuer le stockage des informations sur le réseau de desserte (PLMN2) et sur ladite classe de trafic en temps réel ; et
dans lequel le système est configuré pour effectuer la fourniture du service support en temps réel demandé entre la station mobile (MS1) et le réseau domestique (PLMN1) ; et, sur la base de ladite fourniture,
le noeud de réseau de desserte (SGSN2) est configuré pour effectuer la génération d'un premier enregistrement de facturation en utilisant les informations sur le réseau domestique (PLMN1) de la station mobile (MS1) et sur ladite classe de trafic en temps réel ; et
le noeud de réseau de passerelle (GGSN1) est configuré pour effectuer la génération d'un deuxième enregistrement de facturation en utilisant les informations sur le réseau de desserte (PLMN2) et sur ladite classe de trafic en temps réel.

12. Noeud de réseau de passerelle (GGSN1) d'un réseau mobile (PLMN1) pour un système de télécommunications (S) comprenant en outre :
un réseau de desserte (PLMN2) comprenant un noeud de réseau de desserte (SGSN2) ; et
une station mobile (MS1), ledit réseau mobile étant un réseau domestique de la station mobile ;
dans lequel le noeud de réseau de passerelle (GGSN1) est configuré pour effectuer :
la réception d'une demande de service support émanant du noeud de réseau de desserte (SGSN2), ladite demande comprenant des informations sur une classe de trafic du service support demandé et des informations sur le réseau desservant la station mobile (MS1) ;
**caractérisé en ce que** le noeud de réseau de passerelle (GGSN1), en réponse à la réception d'une demande de service support pour un service support de classe de trafic en temps réel concernant une station mobile (MS1) en itinérance dans le réseau de desserte (PLMN2), est configuré pour effectuer :
le stockage d'informations sur le réseau de desserte (PLMN2) de la station mobile (MS1) et sur ladite classe de trafic en temps réel ; et, sur la base de la fourniture du service support en temps réel entre la station mobile (MS1) et le réseau domestique (PLMN1),
la génération d'un enregistrement de facturation en utilisant les informations sur le réseau de desserte (PLMN2) et sur ladite classe de trafic en temps réel.

13. Noeud de réseau de passerelle selon la revendication 12, **caractérisé en ce qu'**il est configuré pour reconnaître la station mobile itinérante au moyen d'un code de pays mobile (MCC) et d'un code de réseau mobile (MNC).

14. Noeud de réseau de passerelle selon la revendication 12 ou 13, **caractérisé en ce qu'**il est configuré pour reconnaître la station mobile itinérante au moyen d'une adresse IP du noeud de réseau de desserte (SGSN2).

15. Noeud de réseau de passerelle selon la revendication 12, 13 ou 14, **caractérisé en ce qu'**il est un noeud de prise en charge GPRS de passerelle (GGSN).

16. Noeud de réseau de desserte (SGSN2) d'un réseau de desserte (PLMN2) pour un système de télécommunications (S) comprenant en outre :
une station mobile (MS1) ; et
un réseau domestique (PLMN1) de la station mobile (MS1), ledit réseau domestique (PLMN1) comprenant un noeud de réseau de passerelle (GGSN1) ;
dans lequel le noeud de réseau de desserte (SGSN2) est configuré pour effectuer :
la réception d'une demande de service support émanant de la station mobile (MS1), ladite demande comprenant des informations sur une classe de trafic du service support demandé et des informations sur le réseau domestique (PLMN1) de la station mobile (MS1) ;
**caractérisé en ce que** le noeud de réseau de desserte (SGSN2), en réponse à la réception d'une demande de service support pour un service support de classe de trafic en temps réel émanant d'une station mobile (MS1) en itinérance dans le réseau de desserte (PLMN2), est configuré pour effectuer :
l'obtention d'informations sur la classe de trafic de la station mobile (MS1) ;
dans lequel, si la classe de trafic en temps réel demandée est prise en charge par la station mobile (MS1), le noeud de réseau de desserte (SGSN2) est en outre configuré pour effectuer :
le stockage d'informations sur le réseau domestique (PLMN1) de la station mobile (MS1) et sur ladite classe de trafic en temps réel ;
la fourniture au réseau domestique (PLMN1) d'informations sur le réseau de desserte (PLMN2) et sur ladite classe de trafic en temps réel ; et, sur la base de la fourniture du service support en temps réel entre la station mobile (MS1) et le réseau domestique (PLMN1),
la génération d'un enregistrement de facturation en utilisant les informations sur le réseau domestique (PLMN1) et sur ladite classe de trafic en temps réel.

17. Noeud de réseau de desserte selon la revendication 16, **caractérisé en ce qu'**il est configuré pour reconnaître la station mobile itinérante au moyen de l'identité d'abonné mobile internationale (IMSI) de la station mobile.

18. Noeud de réseau de desserte selon la revendication 16 ou 17, **caractérisé en ce qu'**il est un noeud de prise en charge GPRS de desserte (SGSN).
